**Europäisches Patentamt**

**European Patent Office**

**Office européen des brevets**

(11) Numéro de publication : **0 141 767 B1**

(12) **FASCICULE DE BREVET EUROPÉEN**

(45) Date de publication du fascicule du brevet :
19.10.88

(51) Int. Cl.⁴ : **G 02 C  5/12**

(21) Numéro de dépôt : **84420187.1**

(22) Date de dépôt : **05.11.84**

(54) Ensemble de plaquette et porte-plaquette d'appui nasal pour lunettes.

(30) Priorité : **08.11.83 FR 8317992**

(43) Date de publication de la demande :
**15.05.85 Bulletin 85/20**

(45) Mention de la délivrance du brevet :
**19.10.88 Bulletin 88/42**

(84) Etats contractants désignés :
**AT DE GB IT**

(56) Documents cités :
**EP-A- 0 053 332**
**FR-A-   430 062**
**US-A- 1 784 013**
**US-A- 2 035 785**
**US-A- 2 643 580**

(73) Titulaire : **L'AMY S.A.**
**216 rue de la République**
**F-39400 Morez (FR)**

(72) Inventeur : **Labrevois, Daniel**
**Les Chauvettes de Vent La Chaumusse**
**F-39150 Saint-Laurent-en-Grandvaux (FR)**

(74) Mandataire : **Moinas, Michel**
**Cabinet Michel Moinas 13 Chemin du Levant**
**F-01210 Ferney-Voltaire (FR)**

Jouve, 18, rue St-Denis, 75001 Paris, France

## Description

La présente invention a trait à un dispositif d'appui nasal pour lunettes amovible et adaptable sans réglage sur chaque sujet.

Une monture de lunettes s'ajuste sur le visage par des branches sur les oreilles et par des plaquettes s'appuyant sur les côtés du nez reliées à la monture par des bras d'ancrage.

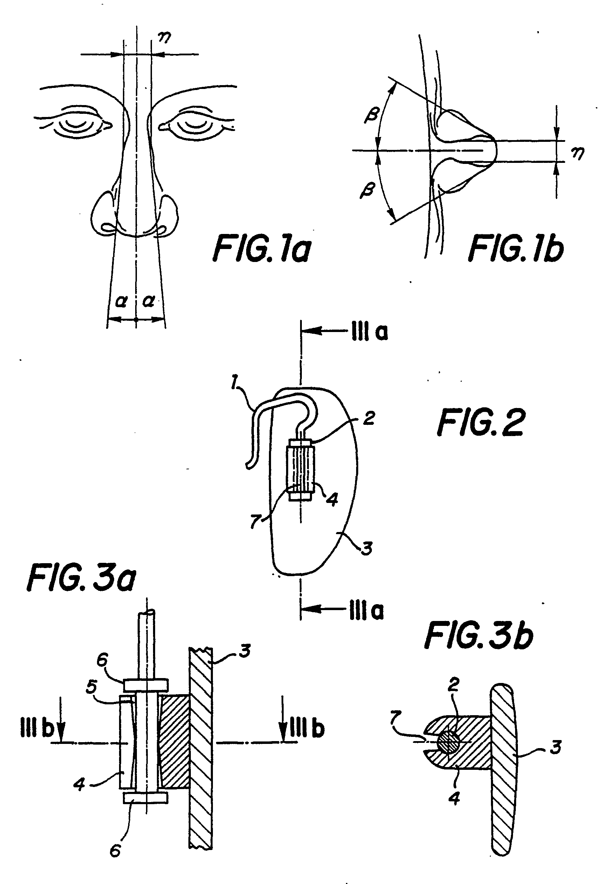

Par référence aux figures 1 du dessin annexé, un nez est caractérisé par deux angles α et β et une largeur n propre à chaque sujet. La largeur du nez n est prise en compte dans le choix de la monture cependant que les plaquettes doivent être positionnées dans chaque cas en fonction de ces angles.

L'angle α, appelé angle de face, est l'angle entre la verticale et le nez vu de face.

L'angle β, appelé angle de chasse, est l'angle entre l'horizontale et le nez vu de dessus.

Ces angles sont généralement différents entre le côté droit et le côté gauche du visage et il appartient à l'opticien de régler la position des plaquettes individuellement sur le visage de chaque sujet. Devant la difficulté du réglage et pour tenir compte du fait qu'il reste permanent, les plaquettes présentent généralement un certain degré de liberté suivant l'angle de face. La fixation entre le bras d'ancrage et la plaquette est réalisée par une vis ou un rivet qui traverse un cadre ou un capuchon solidaire du bras d'ancrage et un talon métallique de la plaquette, le cadre ou le capuchon entourant, respectivement coiffant, le talon. Le débattement a lieu par une rotation de la plaquette autour de la vis ou du rivet, limitée par les parois du cadre ou du capuchon ou rendue possible par le jeu existant dans le trou de passage de la vis ou du rivet. Lorsque la fixation est démontable, le cadre ou le capuchon comporte d'un côté un trou de passage et de l'autre un trou taraudé, une vis venant se visser dans le filetage. Un tel ensemble, représenté par ex. dans le brevet français FR-A-1 424 846 ou la demande de brevet français FR-A-2 487 085, est difficile à monter en raison des petites dimensions de la vis et les pas de vis, généralement peu nombreux, ne résistent pas suffisamment lors des réparations.

Une amélioration sensible apportée par la réalisation de cadre ou de capuchon comportant sur deux côtés opposés des saillies dirigées vers l'intérieur, sur lesquelles viennent s'engager des évidements prévus sur les parois latérales des talons, est illustrée par ex. dans les demandes de brevet français FR-A-2 349 153 et 2 495 788. Selon une autre solution, illustrée dans la demande de brevet européen EP-A-53332, le talon comporte un évidement allongé ménagé dans son corps destiné à recevoir une extrémité du bras d'ancrage formant un étranglement et se terminant par une partie arrondie en forme de rotule, la liaison étant réalisée par l'intermédiaire d'une goupille transversale venant se loger dans le col formé par l'étranglement et bloquer la rotule, la goupille étant maintenue par un clips. Ces différents agencements procurent peut-être le débattement nécessaire suivant l'angle de face mais ne prennent pas en considération l'angle de chasse.

Selon la demande de brevet allemande DE-A-3 043 216, on propose de relier directement le bras d'ancrage à la plaquette en prévoyant une perforation longitudinale dans l'épaisseur de celle-ci sur environ 2/3 de la longueur débouchant par un œillet creusé latéralement sur une face de la plaquette, perforation formant manchon dans lequel vient se loger le bras d'ancrage dont l'extrémité coudée peut se déplacer dans l'œillet, ce qui permet une rotation de la plaquette autour du bras d'ancrage suivant l'angle de chasse. Cet agencement n'est cependant pas amovible et ne tient pas compte de l'angle de face, puisqu'aucun jeu n'est prévu entre le bras d'ancrage et son manchon.

Le brevet US-A-2 643 580 décrit un système de clipsage d'une tige sur la plaquette qui permet un certain débattement de celle-ci, mais n'autorise pas la rotation de la tige. L'ajustement ne s'effectue que selon une seule direction et, en outre, le débattement n'est possible ni selon l'angle de chasse, ni selon l'angle de face, mais bien selon la troisième direction, celle qui leur est orthogonale.

Dans le brevet US-A-2 035 785 est retenue une solution technique assez voisine de celle discutée ci-dessus. Des débattements restent possibles selon deux directions grâce à une surface de contact convexe, la deuxième direction étant en plus rendue possible par l'élasticité de la boucle de fermeture. Ces deux directions ne correspondent cependant pas à la fois aux deux directions des angles de chasse et de face. De plus, il apparaît de manière évidente que ce montage est fréquemment sujet à coincement.

Enfin, le brevet US-A-1 784 013 présente une solution technique où l'attache est réalisée par une bille et non par une tige. Cette bille vient s'assujettir dans un réceptacle où elle est fixée par une goupille. Cette disposition présente cependant l'inconvénient d'une grande complexité et, surtout, suppose l'emploi de plaquettes non conventionnelles.

La présente invention a pour objet un ensemble amovible de plaquette et porte-plaquette d'appui nasal pour monture de lunettes, de conception simple et ne présentant donc pas les inconvénients évoqués ci-dessus. La liaison au porte-plaquette fixé sur la monture s'opère sans l'intermédiaire de vis et permet un pivotement de la plaquette, assurant un débattement important pour l'angle de chasse et un léger débattement pour l'angle de face.

Cet ensemble est caractérisé par le fait que l'extrémité libre du porte-plaquette est constituée d'une tige cylindrique munie de moyens de retenue en translation de la plaquette et que la plaquette est reliée au porte-plaquette au moyen d'un insert fixé à celle-ci comportant un trou recevant la tige, le trou ayant une forme de double cône inversé sur toute sa hauteur de manière à permettre la rotation de la plaquette autour de la tige suivant l'angle de chasse et un léger débattement suivant l'angle de face.

L'invention va être décrite plus en détail, à titre d'exemple, par référence au dessin annexé dans lequel :

la figure 2 est une vue d'une première forme d'exécution de l'ensemble de plaquette et porte-plaquette selon l'invention ;

la figure 3a est une coupe partielle agrandie suivant la ligne IIIa-IIIa de la figure 2 ;

la figure 3b est une coupe suivant la ligne IIIb-IIIb de la figure 3a.

la figure 4a est une vue de côté et en coupe d'une seconde forme d'exécution de l'ensemble de plaquette et porte-plaquette selon l'invention ;

la figure 4b est une vue en coupe suivant IVb-IVb de la figure 4a ;

la figure 5a est une vue de côté et en coupe d'une troisième forme d'exécution de l'ensemble de plaquette et porte-plaquette selon l'invention ;

la figure 5b est une vue de côté et en coupe d'une quatrième forme d'exécution de l'ensemble de plaquette et porte-plaquette selon l'invention et

la figure 5c est une vue en coupe suivant Vc-Vc de la figure 5b.

Dans la forme d'exécution de la figure 2, le porte-plaquette est un bras d'ancrage 1 dont l'extrémité libre est une tige cylindrique 2. La plaquette 3 porte un insert 4 sur lequel elle est surmoulée. L'insert 4 est percé par un trou 5 en forme de double cône inversé, ce qui procure à la plaquette 3 un léger débattement pour l'angle de face et permet sa rotation autour de la tige 2 pour l'angle de chasse. La plaquette 3 est retenue dans le sens vertical par une déformation ou un épaulement 6, réalisé par exemple par écrasement de la tige 2 de part et d'autre de l'insert 4, ou une déformation unique au centre de l'insert la rendant moins visible. Ces éléments de retenue en translation pourraient être réalisés après le montage de la plaquette, mais on préfère ménager une fente 7 dans l'insert 4 de manière à permettre un montage et un démontage facile de la plaquette 3, celle-ci pouvant être clipsée en engageant la tige 2 dans l'insert 4 par la fente 7 ménagée sur toute la hauteur de celui-ci. Selon une variante non représentée, la fente 7 pourrait se situer à 90° de sa position telle que représentée à la figure 3b.

Une plaquette simple ne doit pas pouvoir pivoter de 360° autour de la tige 2 car elle pourrait alors se positionner à l'envers sur le nez du porteur, l'insert étant en regard de la peau. Pour l'éviter, la rotation est limitée par la forme du bras 1. Par contre, dans le cas de plaquettes jumelées, non représenté, la limitation de la rotation de l'ensemble se fait automatiquement et il n'est pas utile de donner à la tige une forme particulière.

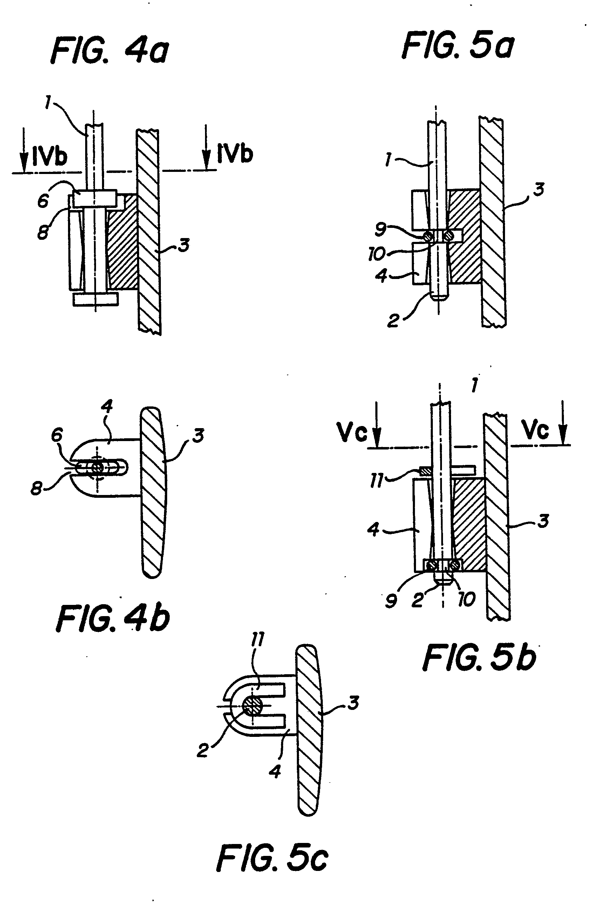

Dans la forme d'exécution des figures 4a et 4b, le bras 1 n'a pas la forme d'une crosse et la rotation suivant l'angle de chasse est limitée par la déformation 6 de la tige formant épaulement, la partie écrasée venant se loger dans une saignée 8.

Dans la forme d'exécution de la figure 5a, une pièce du type jonc ou circlips 9, ce circlips pouvant être remplacé par un écrasement, vient se loger dans la partie centrale de l'insert 4 et est immobilisée dans une gorge 10 de la tige 2, la pièce 9 assurant la limitation de la rotation suivant l'angle de chasse.

Selon la forme d'exécution des figures 5b et 5c, une pièce d'apport 11 solidaire de la tige 2 assure la limitation de la rotation suivant l'angle de chasse.

La tige 2 peut par exemple être en Monel®, l'insert en Maillechort, en alliage de cuivre et de bérylium ou en matière plastique moulés, cependant que la plaquette 3 peut être en matière plastique semi-rigide, par exemple en acétate de cellulose, en matière plastique souple, par exemple en chlorure de polyvinyle ou encore en matière plastique molle, par exemple en résine de silicone.

## Revendications

1. Ensemble amovible de plaquette et porte-plaquette d'appui nasal pour monture de lunettes adaptable sans réglage sur chaque sujet, dans lequel la liaison de la plaquette (3) au porte-plaquette (1) s'opère sans l'intermédiaire de vis au moyen d'un insert (4) fixé à la plaquette (3) et comportant un trou (5) recevant la tige porte-plaquette (2) munie de moyens de retenue en translation de la plaquette caractérisé en ce que l'extrémité libre du porte-plaquette est constituée d'une tige cylindrique (2) et en ce que le trou (5) pratiqué dans l'insert a une forme de double cône inversé sur toute sa hauteur de manière à permettre la rotation de la plaquette autour de la tige suivant l'angle de chasse et un léger débattement suivant l'angle de face.

2. Ensemble de plaquette et porte-plaquette selon la revendication 1, caractérisé par le fait que la plaquette (3) est clipsable en engageant la tige (2) dans le trou (5) de l'insert (4) par une fente (7) ménagée sur toute la hauteur de celui-ci de manière à permettre facilement son montage et son démontage sur le porte-plaquette.

3. Ensemble de plaquette et porte-plaquette selon la revendication 1, caractérisé par le fait que les moyens de retenue en translation de la plaquette (3) sont constitués par des épaulements ou des déformations (6) de la tige (2) de part et d'autre de l'insert (4).

4. Ensemble de plaquette et porte-plaquette selon la revendication 1, caractérisé par le fait que les moyens de retenue en translation de la plaquette (3) sont constitués par une pièce du type jonc ou circlips (9) venant se loger dans la partie centrale de l'insert (4), pièce qui est immobilisée dans une gorge (10) de la tige (2), ladite pièce assurant de plus une limitation de la rotation suivant l'angle de chasse.

5. Ensemble de plaquette et porte-plaquette selon la revendication 1, caractérisé par le fait que la rotation de la plaquette (3) suivant l'angle de chasse est limitée par la configuration en forme de crosse du porte-plaquette (1).

6. Ensemble de plaquette et porte-plaquette selon la revendication 3, caractérisé par le fait que la rotation de la plaquette (3) suivant l'angle de chasse est limitée par un épaulement (6) de la tige (2) obtenu par écrasement de celle-ci, la partie écrasée de la tige venant se loger dans une saignée (8) ménagée à la partie supérieure de l'insert (4).

7. Ensemble de plaquette et porte-plaquette selon la revendication 1, caractérisé par le fait que les moyens de retenue en translation de la plaquette (3) sont constitués par une pièce du type jonc ou circlips (9) venant se loger dans une gorge (10) de la tige (2) à la partie inférieure de l'insert (4) et que la rotation de la plaquette (3) suivant l'angle de chasse est assurée par une pièce d'apport (11) solidaire de la tige (2) dans la partie supérieure de l'insert (4).

8. Ensemble de plaquette et de porte-plaquette selon l'une des revendications 1 à 7, caractérisé par le fait que la tige est en Monel®, l'insert est en Maillechort, en alliage de cuivre et de béryllium ou en matière plastique moulés et la plaquette est en matière plastique semi-rigide, comme l'acétate de cellulose, en matière plastique souple, comme le chlorure de polyvinyle ou encore en matière plastique molle, comme une résine de silicone.

## Claims

1. Detachable set of a nasal support pad and pad carrier for spectacle frames which can be adapted to each individual without adjustment, in which the connecting of the pad (3) to the pad carrier (1) is achieved without using screws by means of an insert (4) which is fixed to the pad (3) and contains a hole (5) which receives the pad carrier pin (2) provided with means for holding the pad in translation, characterised in that the free end of the pad carrier is formed by a cylindrical pin (2) and in that the hole (5) made in the insert has the form of a double inverted cone throughout its height in order to allow the rotation of the pad about the pin corresponding to the pad angle and a slight deflection corresponding to the nasal slope.

2. Set of a pad and pad carrier according to claim 1, characterised in that the pad (3) can be clipped by engaging the pin (2) in the hole (5) of the insert (4) via a slot (7) provided along the whole height of the insert in order to allow the pad to be easily mounted on to and detached from the pad support.

3. Set of a pad and pad carrier according to claim 1, characterised in that the means for holding the pad (3) in translation are formed by shoulders or deformations (6) of the pin (2) on each side of the insert (4).

4. Set of a pad and pad carrier according to claim 1, characterised in that the means for holding the pad (3) in translation are formed by a piece of the retaining ring or circlip type (9) which lodges itself in the central part of the insert (4), this piece being immobilized in a groove (10) of the pin (2) and moreover ensuring that the rotation corresponding to the pad angle is restricted.

5. Set of a pad and pad carrier according to claim 1, characterised in that the rotation of the pad (3) corresponding to the pad angle is restricted by the cruciform configuration of the pad carrier (1).

6. Set of a pad and pad carrier according to claim 3, characterised in that the rotation of the pad (3) corresponding to the pad angle is restricted by a shoulder (6) of the pin (2), the shoulder being formed by crushing the pin and the crushed part of the pin lodging itself in a trench (8) provided in the upper part of the insert (4).

7. Set of a pad and pad carrier according to claim 1, characterised in that the means for holding the pad (3) in translation are formed by a piece of the retaining ring or circlip type (9) which lodges itself in a groove (10) of the pin (2) at the lower part of the insert (4) and in that a solid application piece (11) of the pin (2) in the upper part of the insert (4) ensures that the pad (3) rotates corresponding to the pad angle.

8. Set of a pad and pad carrier according to one of claims 1 to 7, characterised in that the pin comprises Monel metal®, the insert molded nickel silver, alloy of copper and beryllium or plastics material, and the pad a semi-rigid plastics material, such as cellulose acetate, a flexible plastics material, such as poly-vinyl chloride, or also a soft plastics material, such as a silicone resin.

## Patentansprüche

1. Abnehmbarer, ohne Einstellung an jede Person anpaßbarer, zusammengehöriger Nasenpad und Nasenpadträger für Brillenfassungen, bei welchem die Verbindung des Pads (3) mit dem Padträger (1) ohne Schrauben mittels eines am Pad (3) befestigten Inserts (4) erfolgt, welches ein Loch (5) zur Aufnahme des Padträgerstiftes (2) aufweist, der mit Mitteln zum Halten des Pads beim Verschieben versehen ist, dadurch gekennzeichnet, daß das freie Ende des Padträgers aus einem zylindrischen Stift (2) besteht und daß das im Insert angebrachte Loch (5) die Form eines über seine gesamte Höhe umgekehrten Doppelkonus aufweist, sodaß ein Drehen des Pads um den Stift entsprechend dem Nasenflügelwinkel (Winkel zwischen der Horizontalen und der Nase, von oben gesehen) möglich ist und eine leichte Durchfederung entsprechend dem Nasenrückenwinkel (Winkel zwischen der Vertikalen und der Nase, von vorne gesehen).

2. Zusammengehöriger Pad und Padträger gemäß Anspruch 1, dadurch gekennzeichnet, daß der Pad (3) durch Einführen des Stiftes (2) in das Loch (5) des Inserts (4) durch einen über dessen ganze Höhe eingebrachten Schlitz aufgesteckt werden kann, sodaß sein Aufsetzen und seine Abnahme vom Padträger leicht möglich ist.

3. Zusammengehöriger Pad und Padträger gemäß Anspruch 1, dadurch gekennzeichnet, daß die Mittel zum Halten des Pads (3) beim Verschieben aus Ansätzen oder Deformationen (6) des Stiftes (2) zu beiden Seiten des Inserts (4) gebildet werden.

4. Zusammengehöriger Pad und Padträger gemäß Anspruch 1, dadurch gekennzeichnet, daß die Mittel zum Halten des Pads (3) beim Verschieben aus einem sprengring- oder sicherungsringartigen Teil (9) bestehen, welches im Mittelteil des Inserts (4) gelagert ist, Teil, welches in einer Vertiefung (10) des Stiftes (2) festgehalten wird, wobei das genannte Teil außerdem eine Begrenzung der Drehung entsprechend dem Nasenflügelwinkel (Winkel zwischen der Horizontalen und der Nase, von oben gesehen) gewährleistet.

5. Zusammengehöriger Pad und Padträger gemäß Anspruch 1, dadurch gekennzeichnet, daß die Drehung des Pads (3) entsprechend dem Nasenflügelwinkel (Winkel zwischen der Horizontalen und der Nase, von oben gesehen) durch die querhauptförmige Gestaltung des Padträgers (1) begrenzt ist.

6. Zusammengehöriger Pad und Padträger gemäß Anspruch 3, dadurch gekennzeichnet, daß die Drehung des Pads entsprechend dem Nasenflügelwinkel (Winkel zwischen der Horizontalen und der Nase, von oben gesehen) durch einen Ansatz (6) des Stiftes (2), welcher durch Zusammendrücken dieses erzielt wird, begrenzt wird, wobei der zusammengedrückte Teil des Stiftes in einem am Oberteil des Inserts (4) angebrachten Einschnitt (8) gelagert ist.

7. Zusammengehöriger Pad und Padträger gemäß Anspruch 1, dadurch gekennzeichnet, daß die Mittel zum Halten des Pads (3) beim Verschieben aus einem sprengring- oder sicherungsringartigen Teil (9) bestehen, welches in einer Vertiefung (10) des Stiftes (2) am Unterteil des Inserts (4) gelagert ist und daß die Drehung des Pads (3) entsprechend dem Nasenflügelwinkel (Winkel zwischen der Horizontalen und der Nase, von oben gesehen) durch ein mit dem Stift (2) verbundenes Aufnahmestück (11) im Oberteil des Inserts (4) gewährleistet wird.

8. Zusammengehöriger Pad und Padträger gemäß einem der Ansprüche 1 bis 7, dadurch gekennzeichnet, daß der Stift aus Monel® besteht, das Insert aus Maillechort, aus Kupfer/Berylliumlegierung oder aus geformtem Kunststoff und der Pad aus halbhartem Kunststoff wie Zelluloseazetat, aus weichem Kunststoff wie Polyvinylchlorid oder auch aus weichem Kunststoff wie ein Silikonharz.

0 141 767

FIG.1a

FIG.1b

FIG.2

FIG.3a

FIG.3b

1

# FIG. 4a

# FIG. 5a

# FIG. 4b

# FIG. 5b

# FIG. 5c